(19) 

Europäisches
Patentamt
European
Patent Office
Office européen
des brevets

(11) **EP 4 310 138 A1**

(12) **EUROPEAN PATENT APPLICATION**
published in accordance with Art. 153(4) EPC

(43) Date of publication:
**24.01.2024 Bulletin 2024/04**

(21) Application number: **21931716.1**

(22) Date of filing: **01.12.2021**

(51) International Patent Classification (IPC):
*C08K 9/06* (2006.01)   *C08L 25/12* (2006.01)
*C08L 27/18* (2006.01)   *C08L 51/04* (2006.01)
*C08L 69/00* (2006.01)   *C08L 101/12* (2006.01)
*C08K 3/34* (2006.01)

(52) Cooperative Patent Classification (CPC):
**C08K 3/34; C08K 9/06; C08L 25/12; C08L 27/18;
C08L 51/04; C08L 69/00; C08L 101/12**

(86) International application number:
**PCT/JP2021/044080**

(87) International publication number:
**WO 2022/195973 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021  JP 2021043782**

(71) Applicant: **Techno-UMG Co., Ltd.
Tokyo 105-0021 (JP)**

(72) Inventors:
• **HIRAISHI, Kentaro
  Tokyo 105-0021 (JP)**
• **ANDO, Hiroki
  Tokyo 105-0021 (JP)**

(74) Representative: **Vossius & Partner
Patentanwälte Rechtsanwälte mbB
Siebertstraße 3
81675 München (DE)**

(54) **THERMOPLASTIC RESIN COMPOSITION AND MOLDED ARTICLE THEREOF**

(57)    A thermoplastic resin composition containing a polycarbonate resin (A) and a wollastonite (B), wherein the wollastonite (B) is treated with a silane coupling agent containing a linear alkyl group having 12 or more carbon atoms. Further, the thermoplastic resin composition may contain a graft copolymer (C), a vinyl-based copolymer (D), an ultra-high-molecular-weight resin (E), and a Teflon-based resin (F).

EP 4 310 138 A1

Processed by Luminess, 75001 PARIS (FR)

**Description**

Technical Field

The present invention relates to a thermoplastic resin composition in which wollastonite is added as an inorganic filler to a polycarbonate resin in order to increase rigidity and reduce linear thermal expansion. The thermoplastic resin composition of the present invention is a thermoplastic resin composition that suppresses a decrease in impact resistance due to the addition of an inorganic filler and improves high rigidity, a low linear thermal expansion coefficient, and high impact resistance in a well-balanced manner at a high level. The present invention also relates to a molded article obtained by molding the thermoplastic resin composition.

Background Art

Polycarbonate resins, especially aromatic polycarbonate resins, are excellent in moldability, mechanical properties such as impact resistance, dimensional stability, and the appearance of molded articles. For this reason, a polycarbonate resin alone or a resin composition obtained by alloying a polycarbonate resin with ABS resin or AS resin has been used as molding materials in a wide range of industrial fields such as electric/electronic parts and vehicles.

In recent years, the technology of replacing a vehicle part with a resin material has been developed in response to the demand for weight reduction of vehicles such as automobiles. A polycarbonate resin or a polycarbonate resin composition is sometimes blended with an inorganic filler in order to achieve the high rigidity and low linear thermal expansion coefficient necessary for application to these uses (for example, Patent Literature 1 to 3). Various inorganic fillers such as talc, wollastonite, and glass fiber have been used, and the inorganic fillers are sometimes surface-treated with a silane coupling agent in order to improve their compatibility with resins and enhance their compounding effects.

PTL 1: JP 2015-83702 A
PTL 2: JP 2016-102167 A
PTL 3: JP 2013-32537 A

Parts for a vehicle such as an automobile, especially exterior parts made of a resin composition are required to have high rigidity, high impact resistance, high heat resistance, low linear thermal expansion coefficient, good molded appearance, and good painted appearance. However, no resin composition has been provided that satisfies all of these required properties in a well-balanced manner.

The rigidity can be increased by adding inorganic fillers with conventional technology. However, when the amount of the inorganic filler compounded is increased in order to increase the rigidity, the impact resistance is extremely lowered. In addition, molding appearance and coating appearance are also impaired.

Summary of the Invention

An object of the present invention is to provide a thermoplastic resin composition that satisfies the required characteristics of high rigidity, high impact resistance, high heat resistance, low linear thermal expansion coefficient, good molding appearance, and good coating appearance in a well-balanced manner at a high level, and a molded article thereof.

The present inventors have found that it is possible to achieve both high rigidity and high impact resistance of a polycarbonate resin at a high level by using wollastonite treated with a specific silane coupling agent as a reinforcing inorganic filler for the polycarbonate resin. The present inventors also have found that by blending a specific ultra-high-molecular-weight resin or a Teflon-based resin in a resin composition, it is possible to improve the molding appearance and coating appearance, thereby solving the above-mentioned problems.

The gist of the present invention is as follows.

[1] A thermoplastic resin composition comprising a polycarbonate resin (A) and a wollastonite (B), wherein the wollastonite (B) is treated with a silane coupling agent containing a linear alkyl group having 12 or more carbon atoms.

[2] The thermoplastic resin composition according to [1], further comprising a graft copolymer (C), or a graft copolymer (C) and a vinyl-based copolymer (D), the vinyl-based copolymer being obtained by copolymerizing at least an aromatic vinyl-based monomer and a vinyl cyanide-based monomer.

[3] The thermoplastic resin composition according to [2], wherein the graft copolymer (C) is a rubber-reinforced styrene-acrylonitrile-based graft copolymer obtained by graft-polymerizing a monomer mixture containing at least an aromatic vinyl-based monomer and a vinyl cyanide-based monomer in the presence of a diene-based rubbery polymer.

[4] The thermoplastic resin composition according to [2] or [3], wherein the thermoplastic resin composition contains 45 to 65 parts by mass of the polycarbonate resin (A), 15 to 40 parts by mass of an inorganic filler containing the wollastonite (B), 7 to 20 parts by mass of the graft copolymer (C), and 0 to 20 parts by mass of the vinyl-based copolymer (D) so that the total is 100 parts by mass.

[5] The thermoplastic resin composition according to any one of [2] to [4], further comprising an ultra-high-molecular-weight resin (E) having a weight average molecular weight of 2 million or more, or a Teflon-based resin (F), which is different from the polycarbonate resin (A), the graft copolymer (C) and the vinyl-based copolymer (D).

[6] A molded article obtained by molding the thermoplastic resin composition according to any one of [1] to [5].

[7] The molded article according to [6], wherein the article is a vehicle exterior part.

Advantageous Effects of Invention

According to the thermoplastic resin composition of the present invention, it is possible to provide a thermoplastic resin molded article that satisfies the required properties such as high rigidity, high impact resistance, high heat resistance, low linear thermal expansion coefficient, good molding appearance, and good coating appearance at a high level and in a well-balanced manner.

Description of Embodiments

The embodiments of the present invention will be described in detail below.

[Thermoplastic resin composition]

The thermoplastic resin composition of the present invention is a thermoplastic resin composition comprising a polycarbonate (A) and a wollastonite (B), wherein the wollastonite (B) is treated with a silane coupling agent containing a linear alkyl group having 12 or more carbon atoms.

The thermoplastic resin composition of the present invention may further comprise a graft copolymer (C), a vinyl-based copolymer (D), an ultrahigh-molecular-weight resin (E) or a Teflon-based resin (F), and inorganic fillers other than the wollastonite (B).

In the present invention, "(co)polymerization" means "homopolymerization and copolymerization"; "(meth)acrylate" means "at least one of an acrylate and a methacrylate"; and the same applies to "(meth)acrylic acid".

[Polycarbonate Resin (A)]

The polycarbonate resin (A) may be any of polycarbonate resins derived from a polymerization method known in the art. Examples of the polymerization method include interfacial polycondensation between a dihydroxy compound such as a dihydroxy aryl compound and phosgene and transesterification reactions (melt polycondensation) between a dihydroxy compound such as a dihydroxy aryl compound and a carbonate compound such as diphenyl carbonate.

From the viewpoint of mechanical strength such as impact resistance, the polycarbonate resin (A) is preferably an aromatic polycarbonate resin (A).

Examples of the dihydroxy aryl compound include bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)propane, 2,2-bis(4-hydroxy-3-t-butylphenyl)propane, 2,2-bis(4-hydroxy-3-t-butylphenyl)propane, 1,1-bis(4-hydroxyphenyl)cyclopentane, 1,1-bis(4-hydroxyphenyl)cyclohexane, 4,4'-dihydroxyphenyl ether, 4,4'-dihydroxyphenyl sulfide, 4,4'-dihydroxyphenyl sulfone, 4,4'-dihydroxy-3,3'-dimethyl diphenyl sulfone, hydroquinone, and resorcinol. Further examples include polyorganosiloxanes having hydroxy-aryloxy terminal groups (see U.S. patent No. 3,419,634, for example). These may be used alone or in a combination of two or more. Among these, 2,2-bis(4-hydroxyphenyl propane (bisphenol A) is preferable.

The viscosity average molecular weight of the polycarbonate resin (A) is preferably 12,000 to 40,000, more preferably 15,000 to 35,000, and particularly preferably 18,000 to 30,000. When the molecular weight is high, a molded article that is produced has a high mechanical strength, but a decrease in flowability makes it impossible to obtain uniform cells, which tends to degrade the appearance of the molded article. The polycarbonate resin (A) may be two or more kinds of polycarbonate resins (A) having different molecular weights.

The viscosity average molecular weight of the polycarbonate resin (A) can be calculated as follows. A specific viscosity ($\eta$sp) of the polycarbonate resin (A) is measured at 20°C and a concentration of 0.7 g/100 ml (methylene chloride)⌋, with the methylene chloride being used as a solvent, and is substituted into equation below.

$$\text{Viscosity average molecular weight} = ([\eta] \times 8130)^{1.205}$$

In the above equation, $[\eta] = [(\eta sp \times 1.12 + 1)^{1/2} - 1]/0.56C$, where C is the concentration.

The polycarbonate resin (A) prepared by interfacial polycondensation may contain one or more chlorine compounds. The chlorine compounds may adversely affect a durability of the thermoplastic resin composition of the present invention. Accordingly, a chlorine compound content of the polycarbonate resin (A), determined as a chlorine atom content, is preferably less than or equal to 300 ppm and more preferably less than or equal to 100 ppm.

[Wollastonite (B)]

The untreated wollastonite used for the wollastonite (B) is not particularly limited, and any one generally used industrially can be used.

Wollastonite (B) treated with a silane coupling agent preferably has a mass reduction rate of 0.2 to 1.7% by mass, and particularly 0.3 to 1.2% by mass when heated from 30°C to 600°C. When the mass reduction rate is within the above range, a sufficient effect of treatment with the silane coupling agent can be obtained, and excellent impact resistance can be exhibited.

The wollastonite (B) used in the present invention is characterized by being treated with a silane coupling agent containing a linear alkyl group having 12 or more carbon atoms.

When the number of carbon atoms in the alkyl group contained in the silane coupling agent is 11 or less, when the alkyl group contained in the silane coupling agent is a branched alkyl group, or when the silane coupling agent has other substituents, it is not possible to obtain the effect achieving both rigidity and impact resistance according to the present invention at a high level.

From the viewpoint of these effects, the alkyl group contained in the silane coupling agent preferably has 12 to 20 carbon atoms.

Examples of the silane coupling agent containing such alkyl groups include, dodecyltriethoxysilane, dodecyltrimethoxysilane, dodecyltrichlorosilane, chlorododecyldimethylsilane, hexadecyltriethoxysilane, hexadecyltrimethoxysilane, trichlorohexadecylsilane, octadecyltriethoxysilane, octadecyltrimethoxysilane, methoxydimethyloctadecylsilane, dimethyloctadecylchlorosilane, trichlorooctadecylsilane and the like.

Only one type of these silane coupling agents may be used, or two or more types may be mixed and used.

The method of surface treatment with a silane coupling agent is not particularly limited, and dry, wet, and integral blend methods can be used. Any method may be used, but a dry method or a wet method is preferred.

The treatment amount of wollastonite (B) with the silane coupling agent is not particularly limited as long as the effects of the present invention can be obtained. The treatment amount of the silane coupling agent is preferably 0.3 to 3% by mass, and more preferably 0.5 to 2% by mass, based on the untreated wollastonite. When the amount of treatment with the silane coupling agent is within the above range, the effect of the treatment with the silane coupling agent can be sufficiently obtained, and excellent impact resistance can be exhibited.

[Graft copolymer (C)]

From the viewpoint of high impact resistance, the graft copolymer (C) is preferably a rubber-reinforced styrene-acrylonitrile-based resin obtained by graft-polymerizing an aromatic vinyl-based monomer and a vinyl cyanide-based monomer in the presence of a rubbery polymer.

Examples of the rubbery polymer include diene-based rubbers, such as polybutadiene, polyisoprene, butadienestyrene copolymers, and butadiene-acrylonitrile copolymers; olefinic rubbers, such as ethylene-propylene copolymers, ethylene-propylene-non-conjugated diene copolymers, ethylene-butene-1 copolymers, and ethylene-butene-1-non-conjugated diene copolymers; acrylic rubbers; silicone rubbers; polyurethane-based rubbers; silicone-acrylic IPN rubbers; natural rubbers; conjugated diene-based block copolymers; hydrogenated conjugated diene-based block copolymers and the like.

From the viewpoint of the balance between impact resistance and other physical properties, the rubbery polymer used in the present invention is preferably a diene-based rubbery polymer such as a butadiene-based polymer, a butadiene/styrene copolymer and the like. The volume average particle size of the rubbery polymer is preferably 50 to 3000 nm, and particularly preferably 50 to 2000 nm. When the volume average particle size is less than the above lower limit, the impact resistance tends to be poor. When the volume average particle size exceeds the above upper limit, the surface appearance of the molded article tends to be poor.

A diene-based rubber-reinforced styrene-acrylonitrile-based graft copolymer suitable for the present invention is obtained by graft polymerizing the monomer mixture containing at least an aromatic vinyl-based monomer and a vinyl cyanide-based monomer in the presence of the above-mentioned diene-based rubbery polymer. The monomer mixture may contain other copolymerizable vinyl-based monomers in addition to the aromatic vinyl-based monomer and the vinyl cyanide-based monomer.

A diene-based rubber-reinforced styrene-acrylonitrile-based graft copolymer is preferably obtained by polymerizing 80 to 30 parts by mass of the mixture containing an aromatic vinyl-based monomer and a vinyl cyanide-based monomer in the presence of 20 to 70 parts by mass of the above diene-based rubbery polymer (provided that the total of the diene-based rubbery polymer and the monomer mixture is 100 parts by mass). More preferably, the ratio is 30 to 60 parts by mass of the diene-based rubbery polymer and 70 to 40 parts by mass of the monomer mixture.

Examples of the aromatic vinyl-based monomer to be used include styrene, t-butylstyrene, $\alpha$-methylstyrene, p-methylstyrene, hydroxystyrene, vinylxylene, monochlorostyrene, dichlorostyrene, monobromostyrene, dibromostyrene, fluorostyrene, p-t-butylstyrene, ethylstyrene, vinyl naphthalene, divinylbenzene, 1,1-diphenylstyrene, N,N-diethyl-p-aminoethylstyrene, N,N-diethyl-p-aminoethylstyrene, and vinylpyridine. These may be used alone or in a combination of two or more. Among these, the aromatic vinyl-based monomer is preferably styrene or $\alpha$-methylstyrene, and more preferably styrene.

Examples of the vinyl cyanide-based monomer include acrylonitriles and methacrylonitriles. These may be used alone or in a combination of two or more. In the instance where a vinyl cyanide-based monomer is used, chemical resistance is imparted.

The ratio of the aromatic vinyl-based monomer and the vinyl cyanide-based monomer used for graft polymerization is, in mass ratio, aromatic vinyl-based monomer:vinyl cyanide-based monomer= preferably 60 to 90:40 to 10, and particularly preferably 70-80:30-20. Within this range, the compatibility with the polycarbonate resin (A) is improved, and an excellent balance of physical properties can be exhibited.

Examples of the other vinyl-based monomer copolymerizable with the aromatic vinyl-based monomer and the vinyl cyanide-based monomer include (meth)acrylic acid ester compounds, maleimide compounds, and other unsaturated compounds containing one or more functional groups. Examples of the other unsaturated compounds containing one or more functional groups include unsaturated acid compounds, epoxy-group-containing unsaturated compounds, hydroxy-group-containing unsaturated compounds, acid-anhydride-group-containing unsaturated compounds, oxazoline-group-containing unsaturated compounds, and substituted or unsubstituted amino-group-containing unsaturated compounds. These different vinyl monomers may be used alone or in a combination of two or more.

Examples of the (meth)acrylic acid ester compounds include methyl acrylate, ethyl acrylate, butyl acrylate, methyl methacrylate, ethyl methacrylate, and butyl methacrylate. These may be used alone or in a combination of two or more. In the instance where a (meth)acrylic acid ester compound is used, surface hardness is improved. An amount of use of the (meth)acrylic acid ester compound is usually 0 to 75 % by mass as a ratio in the monomer mixture.

Examples of the maleimide compounds include maleimides, N-phenylmaleimide, and N-cyclohexylmaleimide. These may be used alone or in a combination of two or more. The introduction of the maleimide unit may be carried out by copolymerizing a maleic anhydride and subsequently performing imidization. In the instance where a maleimide compound is used, heat resistance is imparted. An amount of use of the maleimide compound is usually 0 to 30 % by mass as a proportion in the total monomer mixture.

Examples of the unsaturated acid compounds include acrylic acid, methacrylic acid, ethacrylic acid, maleic acid, fumaric acid, itaconic acid, crotonic acid, and cinnamic acid. These may be used alone or in a combination of two or more.

Examples of the epoxy-group-containing unsaturated compounds include glycidyl acrylate, glycidyl methacrylate, and allyl glycidyl ether. These may be used alone or in a combination of two or more.

Examples of the hydroxy-group-containing unsaturated compounds include 3-hydroxy-1-propene, 4-hydroxy-1-butene, cis-4-hydroxy-2-butene, trans-4-hydroxy-2-butene, 3-hydroxy-3-methyl-1-propene, 2-hydroxyethyl methacrylate, 2-hydroxyethyl acrylate, and N-(4-hydroxyphenyl)maleimide. These may be used alone or in a combination of two or more.

Examples of the oxazoline-group-containing unsaturated compounds include vinyl oxazoline. These may be used alone or in a combination of two or more.

Examples of the acid-anhydride-group-containing unsaturated compounds include maleic anhydride, itaconic anhydride, and citraconic anhydride. These may be used alone or in a combination of two or more.

Examples of the substituted or unsubstituted amino-group-containing unsaturated compounds include aminoethyl acrylate, propylaminoethyl acrylate, dimethylaminoethyl methacrylate, phenylaminoethyl methacrylate, N-vinyl diethylamine, N-acetyl vinylamine, acrylamine, N-methylacrylamine, acrylamide, N-methylacrylamide, and p-aminostyrene. These may be used alone or in a combination of two or more.

In instances where one or more other unsaturated compounds containing one or more functional groups are used, one possibility is that, for the blending of the polycarbonate resin (A), the graft copolymer (C) and the vinyl-based copolymer (D) described later, compatibility between these may be improved. In this case, the amount of the other unsaturated compounds containing one or more functional groups is typically 0.1 to 20 % by mass and preferably 0.1 to 10 % by mass, relative to the total mass of the graft copolymer (C) and the vinyl-based copolymer (D). The amount of use is the total amount of unsaturated compounds containing a functional group that are used.

The graft copolymer (C) such as a diene-based rubber-reinforced styrene-acrylonitrile-based graft copolymer can be produced with a polymerization method known in the art, examples of which include emulsion polymerization, bulk polymerization, solution polymerization, suspension polymerization, and combinations of any of these. Regarding the polymerization method, in instances where the rubbery polymer is derived from emulsion polymerization, the production of the graft copolymer (C) may also be carried out by emulsion polymerization. In instances where the rubbery polymer is derived from solution polymerization, the production of the graft copolymer (C) is typically and preferably carried out by bulk polymerization, solution polymerization, or suspension polymerization. Even in instances where the rubbery polymer is produced by solution polymerization, the production of the graft copolymer (C) can be carried out by emulsion polymerization, which can be performed by emulsifying the rubbery polymer by using a method known in the art. Even in instances where the rubbery polymer is produced by emulsion polymerization, the production of the graft copolymer (C) can be carried out by bulk polymerization, solution polymerization, or suspension polymerization, which can be performed after the rubbery polymer is coagulated and isolated.

In instances where emulsion polymerization is used for the production, any of the following is used: a polymerization initiator, a chain transfer agent, an emulsifying agent, and the like. All of these may be ones known in the art.

Examples of the polymerization initiator include cumene hydroperoxide, p-menthane hydroperoxide, diisopropylbenzene hydroperoxide, tetramethylbutyl hydroperoxide, tert-butyl hydroperoxide, potassium persulfate, and azobisisobutyronitrile. It is preferable to use a redox system as an auxiliary polymerization initiator, and the redox system may include those that use any of various types of reduction agents, saccharated iron pyrophosphate, sulfoxylate, and the like.

Examples of the chain transfer agent include octyl mercaptans, n-dodecyl mercaptans, t-dodecyl mercaptans, n-hexyl mercaptans, and terpinolenes.

Examples of the emulsifying agent that may be used include alkyl benzene sulfonic acid salts, such as sodium dodecylbenzene sulfonate; aliphatic sulfonic acid salts, such as sodium lauryl sulfate; higher fatty acid salts, such as potassium laurate, potassium stearate, potassium oleate, and potassium palmitate; and rosin acid salts, such as potassium rosinate.

In the emulsion polymerization, the manner of using the rubbery polymer and the monomer mixture may be as follows. In the presence of the total amount of the rubbery polymer, the monomer mixture may be added at one time for polymerization or added in portions or continuously for polymerization. It is also possible to add a portion of the rubbery polymer during the polymerization.

After the emulsion polymerization, the obtained latex is usually coagulated with a coagulating agent. Subsequently, the resultant is washed with water and dried to give a powder of the graft copolymer (C). In this instance, the coagulation may be performed after two or more types of latices of the graft copolymer (C) obtained in the emulsion polymerization are appropriately blended together. The coagulation may be performed after a latex of the vinyl-based copolymer (D) described later is appropriately blended. Examples of the coagulating agent that may be used include inorganic salts, such as calcium chloride, magnesium sulfate, and magnesium chloride; and acids, such as sulfuric acid, acetic acid, citric acid, and malic acid. It is also possible to obtain a powder of the graft copolymer (C) by atomizing and drying the latex.

In instances where the graft copolymer (C) is produced by solution polymerization, solvents that may be used are inert polymerization solvents that are used in typical radical polymerization. Examples thereof include aromatic hydrocarbons, such as ethyl benzene and toluene, ketones, such as methyl ethyl ketone and acetone, acetonitrile, dimethylformamide, and N-methylpyrrolidone.

The polymerization temperature is typically within a range of 80 to 140°C and preferably 85 to 120°C. For the polymerization, a polymerization initiator may be used, or the polymerization may be carried out by thermal polymerization without using a polymerization initiator.

Suitable examples of polymerization initiators that may be used include organic peroxides, such as ketone peroxides, dialkyl peroxides, diacyl peroxides, peroxyesters, hydroperoxides, azobisisobutyronitrile, and benzoyl peroxide. In instances where a chain transfer agent is used, examples of chain transfer agents that may be used include mercaptans, terpinolenes, and $\alpha$-methylstyrene dimers.

In instances where the graft copolymer (C) is produced by bulk polymerization or suspension polymerization, any of the polymerization initiators, chain transfer agents, and the like described above for the solution polymerization may be used.

An amount of residual monomers in the graft copolymer (C) produced by any of the above-mentioned polymerization methods is typically less than or equal to 10,000 ppm and preferably less than or equal to 5,000 ppm.

The graft copolymer (C), which is obtained by polymerizing the monomer mixture in the presence of the rubbery polymer, includes a copolymer in which the one or more vinyl-based monomers in the monomer mixture is graft-copolymerized with the rubbery polymer and includes a non-grafted component (a (co)polymer of the one or more vinyl-based monomers) in which the one or more vinyl-based monomers is not grafted with the rubbery polymer.

Typically, the graft copolymer (C) such as a diene-based rubber-reinforced styrene-acrylonitrile-based graft copolymer has a grafting ratio adjusted to be 10 to 150 % by mass. The grafting ratio is preferably 20 to 130 % by mass, more preferably 30 to 110 % by mass, and particularly preferably 40 to 100%. The grafting ratio can be varied by varying one or more factors, examples of which include the type and the amount of use of the polymerization initiator, the type and the amount of use of the chain transfer agent, the polymerization method, the time of contact between the one or more vinyl-based monomers and the rubbery polymer during polymerization, the type of the rubbery polymer, and the polymerization temperature.

The grafting ratio of the graft copolymer (C) such as a diene-based rubber-reinforced styrene-acrylonitrile-based graft copolymer can be determined according to equation below.

$$\texttt{Grafting ratio (\% by mass)} = \{(T-S)/S\} \times 100$$

In the above equation, T is a mass (g) of an insoluble component resulting from an operation performed as follows: 1 g of the diene-based rubber-reinforced styrene-acrylonitrile-based graft copolymer is added to 20 ml of acetone, the resultant is shaken with a shaker for 2 hours, and subsequently, the resultant is centrifuged with a centrifuge (rotational speed: 23,000 rpm) for 60 minutes to separate a soluble component from the insoluble component. S is a mass (g) of the diene-based rubbery polymer present in 1 g of the diene-based rubber-reinforced styrene-acrylonitrile-based graft copolymer.

Typically, the acetone-soluble component of the graft copolymer (C) such as a diene-based rubber-reinforced styrene-acrylonitrile-based graft copolymer has an intrinsic viscosity $[\eta]$ (measured at 30°C in methyl ethyl ketone used as a solvent) of 0.15 to 1.2 dl/g. The intrinsic viscosity is preferably 0.2 to 1.0 dl/g and more preferably 0.2 to 0.8 dl/g.

Typically, the particles of the grafted rubbery polymer dispersed in the graft copolymer (C) such as a diene-based rubber-reinforced styrene-acrylonitrile-based graft copolymer have an average particle diameter of 50 to 3,000 nm. The average particle diameter is preferably 50 to 2,5000 nm and particularly preferably 50 to 2,000 nm. If the rubber particle diameter is less than 50 nm, the impact resistance tends to decrease. If the rubber particle diameter is greater than 3,000 nm, the surface appearances of molded articles tends to degrad.

One kind of graft copolymer (C) may be used alone, or two or more kinds of graft copolymer (C) that are different in the copolymer composition, physical properties, and/or the like may be mixed together and used.

[Vinyl-based copolymer (D)]

The vinyl-based copolymer (D) is obtained by copolymerizing at least an aromatic vinyl-based monomer and a vinyl cyanide-based monomer. The vinyl-based copolymer (D) may be obtained by further copolymerizing other vinyl-based monomers other than aromatic vinyl-based monomers and vinyl cyanide-based monomers.

As the aromatic vinyl-based monomer, vinyl cyanide-based monomer, and other vinyl-based monomers, all those described in the description of the graft copolymer (C) can be used.

The vinyl-based monomer in the graft copolymer (C) and the vinyl-based monomer in the vinyl-based copolymer (D) may be the same or different.

The ratio of the aromatic vinyl-based monomer and the vinyl cyanide-based monomer constituting the vinyl-based copolymer (D) is, in mass ratio, aromatic vinyl-based monomer:vinyl cyanide-based monomer= preferably 60-90:40-10, and particularly preferably 70-80:30-20. Within this range, the compatibility with the polycarbonate resin (A) is improved, and an excellent balance of physical properties can be exhibited.

The total content of the vinyl-based monomers other than the aromatic vinyl-based monomer and the vinyl cyanide-based monomer used in the copolymerization of the vinyl-based copolymer (D) is usually 75% by mass or less, preferably 50% by mass or less, and more preferably 25% by mass or less, when the total of these is 100% by mass.

Preferred vinyl-based copolymers (D) include styrene/acrylonitrile copolymers, styrene/acrylonitrile/methyl methacrylate copolymers, and copolymers of these with the aforementioned functional group-containing unsaturated compounds.

The vinyl-based copolymer (D) can be produced by emulsion polymerization, bulk polymerization, solution polymerization, suspension polymerization, or a combination thereof, which are known polymerization methods described in the production method of the graft copolymer (C).

The weight average molecular weight of the vinyl-based copolymer (D) is usually 40,000 to 300,000, and preferably 60,000 to 200,000. When the weight average molecular weight of the vinyl-based copolymer (D) is within the above range, mechanical strength and moldability are further improved.

The weight-average molecular weight of the vinyl-based copolymer (D) is a standard polystyrene-equivalent value measured by gel permeation chromatography (GPC).

The vinyl-based copolymer (D) may be used alone or in combination of two or more having different copolymer compositions and physical properties.

[Other inorganic fillers]

The thermoplastic resin composition of the present invention may contain inorganic fillers other than wollastonite (B) as long as the object of the present invention is not impaired.

Specific examples of the other inorganic fillers include inorganic compound powders such as talc, calcium carbonate, mica, kaolin, diatomaceous earth, silica, titania, and zeolite, and glass fibers. Only 1 type or 2 or more types of these may be used.

The other inorganic fillers may be surface-treated with a silane coupling agent, a titanate-based coupling agent, or the like.

[Ultra-high-molecular-weight resin (E)]

In addition to the polycarbonate resin (A), the graft copolymer (C), and the vinyl-based copolymer (D), the thermoplastic resin composition of the present invention may contain a high-molecular-weight resin (E) having a weight average molecular weight of 2,000,000 or more, which is different from these resins. By containing the high-molecular-weight resin (E), it is possible to improve the appearance of the resulting molded article and the appearance of the coating.

The weight average molecular weight of the high-molecular-weight resin (E) may be any value greater than or equal to 2,000,000, and the type and the like of the resin are not particularly limited. Preferably, the high-molecular-weight resin (E) is a thermoplastic resin. Examples thereof include a (co)polymer resin including structural units derived from an aromatic vinyl compound (hereinafter referred to as a "resin (E1)"), a (co)polymer resin including structural units derived from a (meth)acrylic acid alkyl ester compound in which the alkyl group has 1 to 4 carbon atoms (hereinafter referred to as a "resin (E2)"), a (co)polymer resin of an $\alpha$-olefin having 2 to 6 carbon atoms, and polycarbonate. Among these, the resin (E1) and the resin (E2) are preferable.

If the weight average molecular weight of the high-molecular-weight resin (E) is less than 2,000,000, the effect of improving the external appearance of the molded article and the coated external appearance cannot be sufficiently obtained. From these standpoints, it is preferable that the weight average molecular weight of the high-molecular-weight resin (E) is greater than or equal to 2,500,000. More preferably, the weight average molecular weight is greater than or equal to 3,000,000. If the weight average molecular weight of the high-molecular-weight resin (E) is excessively high, the thermoplastic resin composition of the present invention becomes non-uniform, and, accordingly, the weight average molecular weight of the high-molecular-weight resin (E) is preferably less than or equal to 7,000,000 and more preferably less than or equal to 5,000,000.

The weight average molecular weight of the high-molecular-weight resin (E) can be measured by gel permeation chromatography (GPC) using a standard polystyrene, with dimethylformamide being used as a solvent.

Regarding the ultra-high-molecular-weight resin (E), examples of the aromatic vinyl-based monomer that forms the resin (E1) include the aromatic vinyl-based monomer mentioned above as examples regarding the graft copolymer (C), and among these, styrene and $\alpha$-methylstyrene are preferable.

The resin (E1) may include structural units derived from a different polymerizable compound, other than aromatic vinyl-based monomer. For example, the structural units that may be included may be derived from any of the following compounds: a vinyl cyanide-based monomer, a (meth)acrylic acid ester compound, a maleimide-based compound, an acid anhydride, a vinyl-based monomer having a functional group, such as a hydroxyl group, an amino group, an epoxy group, an amide group, a carboxyl group, or an oxazoline group, and the like. The additional structural units may be one type of structural units or a combination of two or more types of structural units.

The other polymerizable compound may be any of the various vinyl-based monomers mentioned above as examples regarding the graft copolymer (C).

Preferably, the vinyl cyanide compound is acrylonitrile.

Preferably, the (meth)acrylic acid ester compound is methyl methacrylate or n-butyl acrylate.

Preferably, the maleimide-based compound is N-phenylmaleimide or N-cyclohexylmaleimide.

Preferably, the acid anhydride is maleic anhydride.

Preferably, the hydroxyl-group-containing vinyl-based compound is 2-hydroxyethyl methacrylate.

Preferably, the epoxy-group-containing vinyl-based compound is glycidyl methacrylate.

Preferably, the amide-group-containing vinyl-based compound is acrylamide.

From the standpoint of a molding processability of the thermoplastic resin composition of the present invention, it is preferable that the resin (E1) be a styrenic copolymer including aromatic vinyl-based monomer units and vinyl cyanide-based monomer units. The styrenic copolymer may be a bipolymer or a copolymer further including additional other structural units, such as a terpolymer, a tetrapolymer, or the like.

When the resin (E1) has any of the following configurations, it is possible to produce, without reducing the molding processability, a molded article having an excellent balance between a molding appearance and heat resistance.

In instances where the resin (E1) is a bipolymer prepared from an aromatic vinyl-based monomer and a vinyl cyanide-based monomer, the content proportions of the aromatic vinyl-based monomer units and the vinyl cyanide-based monomer units are preferably 50 to 95 % by mass and 5 to 50 % by mass, respectively, more preferably 60 to 90 % by mass and 10 to 40 % by mass, respectively, and even more preferably 70 to 80 % by mass and 20 to 30 % by mass, respectively, provided that the sum of the content proportions is 100 % by mass. If the content of the vinyl cyanide-based monomer units is excessively high, a molded article that is produced has low heat resistance, and the molded article tends to colored. If the content is excessively low, ductility may decrease.

When the resin (E1) contains other structural units in addition to the aromatic vinyl-based monomer units and the vinyl cyanide-based monomer units, the upper limit of the amount of the polymerizable compound that forms the other structural units is preferably 50 % by mass and more preferably 25 % by mass, based on 100% by mass of all vinyl-based monomers including the aromatic vinyl-based monomer and the vinyl cyanide-based monomer. If the amount of use is greater than 50 % by mass, the thermoplastic resin composition tends to have a low processability.

When the resin (E1) is composed of aromatic vinyl-based monomer units, vinyl cyanide-based monomer units, and other structural units, the content of aromatic vinyl-based monomer units is preferably 55 to 90 % by mass, the content of vinyl cyanide-based monomer units is preferably 15 to 40 % by mass, and the content of other structural units is preferably 0 to 25 % by mass, with respect to the total 100% by mass of these structural units.

The resin (E2) is a (co)polymer including (meth)acrylic acid alkyl ester monomer units in which the alkyl group has 1 to 4 carbon atoms. Preferably, the resin (E2) is a polymethyl methacrylate.

The resins (E1) and (E2) can be produced with a method similar to that used for the abovementioned graft copolymer (C) and the vinyl-based copolymer (D).

The high-molecular-weight resin (E) that is used in the thermoplastic resin composition of the present invention may be only one type of component or two or more types of components that are different, for example, in the resin type or physical properties.

[Teflon-based resin (F)]

The thermoplastic resin composition of the present invention may contain a Teflon-based resin (F) in addition to the polycarbonate resin (A), the graft copolymer (C) and the vinyl-based copolymer (D). By containing the Teflon-based resin (F), the appearance of the molded article obtained and the appearance of the coating can be improved.

The Teflon-based resin (F) may be homo-PTFE consisting only of tetrafluoroethylene (TFE) units, or modified PTFE containing TFE units and modified monomers copolymerizable with TFE. In order to improve dispersibility in the resin composition, acrylic-modified PTFE may be used as the PTFE. Examples of acrylic-modified PTFE include a resin obtained by dispersing PTFE and an acrylic resin in the same dispersion medium and drying and solidifying the solid content. The use of acrylic-modified PTFE makes it easier to uniformly disperse PTFE in the resin composition.

The thermoplastic resin composition of the present invention may contain only one type of Teflon-based resin (F) or may contain two or more types of the resins (F) having different resin types and physical properties.

[Content of each component]

In the thermoplastic resin composition of the present invention, the content of the polycarbonate resin (A) is preferably 45 to 65 parts by mass, the content of the inorganic filler containing wollastonite (B) is preferably 15 to 40 parts by mass, and the content of the graft copolymer (C) is preferably 7 to 20 parts by mass and the content of the vinyl-based copolymer (D) is preferably 0 to 20 parts by mass, with respect to 100 parts by mass in total of the polycarbonate resin (A), the inorganic filler containing the wollastonite (B), the graft copolymer (C), and the vinyl-based copolymer (D).

When the content of the polycarbonate resin (A) is at least the above lower limit, high impact resistance and high heat resistance can be exhibited. When the content of the polycarbonate resin (A) is equal to or less than the above upper limit, deterioration of moldability can be prevented.

When the content of the inorganic filler containing wollastonite (B) is at least the above lower limit, effects such as high rigidity and low linear thermal expansion coefficient due to the inclusion of the inorganic filler can be sufficiently obtained. When the content of the inorganic filler containing wollastonite (B) is equal to or less than the above upper limit, it is possible to prevent deterioration of moldability and impact resistance.

When an inorganic filler other than wollastonite (B) is contained as an inorganic filler, the ratio of wollastonite (B) treated with a specific silane coupling agent in 100% by mass of the inorganic filler is preferably 40% by mass or more, more preferably 60 to 100% by mass, and 100% by mass % is most preferred from the viewpoint of more effectively obtaining the effects of the present invention by using wollastonite (B) treated with a specific silane coupling agent.

When the content of the graft copolymer (C) is at least the above lower limit, excellent impact resistance can be exhibited. If the content of the raft copolymer (C) is equal to or less than the above upper limit, it is possible to prevent deterioration of moldability and molding appearance.

When the content of the vinyl-based copolymer (D) is equal to or less than the above upper limit, it is possible to prevent deterioration of impact resistance and heat resistance.

When the thermoplastic resin composition of the present invention further contains an ultra-high molecular-weight resin (E) or a Teflon-based resin (F), the content of the ultra-high-molecular-weight resin (E) or the Teflon-based resin (F) is preferably 0.1 to 10 parts by mass, more preferably 0.3 to 8 parts by mass, and even more preferably 0.5 to 5 parts by mass, with respect to 100 pats by mass in total of the polycarbonate resin (A), the inorganic filler containing the wollastonite (B), the graft copolymer (C), and the vinyl-based copolymer (D).

When the content of the ultra-high molecular weight resin (E) or Teflon-based resin (F) is at least the above lower limit, it is possible to sufficiently obtain the improvement effect of appearance of the molded article and coating appearance by blending the ultra-high-molecular weight resin (E) or Teflon-based resin (F). When the content of the ultra-high-molecular-weight resin (E) or the Teflon-based resin (F) is equal to or less than the above upper limit, it is possible to prevent deterioration of moldability due to excessive blending of the ultra-high-molecular-weight resin (E).

In the thermoplastic resin composition of the present invention, the content of the rubbery polymer derived from the graft copolymer (C) is preferably 3.5 to 20 parts by mass, and more preferably 5 to 15 parts by mass, with respect to 100 parts by mass of the resin component that is the sum of the polycarbonate resin (A), the graft copolymer (C), the vinyl-based copolymer (D), and the optionally contained ultra-high molecular weight resin (E), Teflon-based resin (F), and other resins described later. When the content of the rubbery polymer relative to 100 parts by mass of the resin component is at least the above lower limit, excellent impact resistance can be exhibited even in a notched impact test. When the content of the rubbery polymer with respect to 100 parts by mass of the resin component is equal to or less than the above upper limit, good moldability can be obtained.

[Other Components]

<Heat Aging Inhibitor>

The thermoplastic resin composition of the present invention may contain a heat aging inhibitor. Examples of the heat aging inhibitor include phenolic inhibitors, phosphorus-containing inhibitors, and sulfur-containing inhibitors. Preferably, the heat aging inhibitor may be a ternary mixture system including a phenolic inhibitor, a phosphorus-containing inhibitor, and a sulfur-containing inhibitor. Using such a ternary mixture system as a heat aging inhibitor produces an effect of maintaining a tensile elongation associated with long-time exposure to a high temperature.

Regarding the heat aging inhibitor, examples of the phenolic inhibitor include 2,6-di-tert-butylphenol derivatives, 2-methyl-6-tert-butylphenol derivatives, octadecyl 3-(3,5-di-tert-butyl-4-hydroxyphenyl)propionate, 4,4'-butylidenebis(6-tert-butyl-m-cresol), pentaerythrityl tetrakis [3-(3,5-di-tert-butyl-4-hydroxyphenyl)propionate], 2-[1-(2-hydroxy-3,5-di-tert-pentylphenyl)ethyl]-4,6-di-tert-pentylphenyl acrylate, and 2-tert-butyl-6-(3-tert-butyl-2-hydroxy-5-methylbenzyl)-4-methylphenyl acrylate.

Examples of the phosphorus-containing inhibitor include tris(2,4-di-tert-butylphenyl)phosphite, cyclicneopentanetetraylbis(2,4-di-tert-utylphenylphophite), distearylpentaerythritoldiphosphite, sodium dihydrogenphosphate, and disodium hydrogen phosphate.

Examples of the sulfur-containing inhibitor include didodecyl 3,3'-thiodipropionate, dioctadecyl 3,3'-thiodipropionate, pentaerythritol tetrakis(3-laurylpropionate), and dilauryl 3,3'-thiodipropionate.

In the thermoplastic resin composition of the present invention, a content of the heat aging inhibitor is typically 0 to 5 mass% and preferably 0 to 3 mass%. In the thermoplastic resin composition of the present invention, the addition of a heat aging inhibitor improves the heat aging properties of the graft copolymer (C) and the vinyl-based copolymer (D) but not those of the polycarbonate resin (A); in some instances, the heat aging inhibitor acts as a catalyst for the polycarbonate resin (A) to promote hydrolysis, therefore, there is sometimes a tendency for deterioration to be inhibited by refraining from adding the heat aging inhibitor. With these conflicting effects taken into account, the heat aging inhibitor may be added in an amount of at most 5 mass%, and in this case, an optimal heat-aging-inhibiting effect can be produced.

<Other Additives>

The thermoplastic resin composition of the present invention may include one or more known additives, example of which include weathering agents, lubricants, coloring agents, flame retardants, flame retardant aids, antistatic agents, and silicone oils. Preferred examples of the weathering agents include benzotriazole-based agents, triazine-based agents, and benzophenone-based agents. Preferred examples of the lubricants include ester-based lubricants such as hydrogenated castor oils. Examples of the coloring agents include carbon black and red iron oxide. Examples of the antistatic agents include polyethers and alkyl-group-containing sulfonic acid salts.

<Other Resins>

The thermoplastic resin composition of the present invention may include an additional thermoplastic resin, other than the polycarbonate resin (A), graft copolymer (C), and vinyl-based copolymer (D), to an extent in which the properties sought by the present invention are not impaired. For example, the additional thermoplastic resin may be present in an amount less than or equal to 20 parts by mass with respect to 100 parts by mass of the total of the polycarbonate resin (A), graft copolymer (C), and vinyl-based copolymer (D) and the additional resin. Examples of thermoplastic resins that may be included in the thermoplastic resin composition of the present invention include polyolefin-based resins, vinyl chloride-based resins, acrylic-based resins, polyester-based resins, polyamide-based resins, polyacetal-based resins, polyphenylene-ether-based resins, and polyarylene-sulfide-based resins. These thermoplastic resins may be used alone or in a combination of two or more.

[Production of thermoplastic resin composition]

The thermoplastic resin composition of the present invention can be produced by kneading each component using various extruders, Banbury mixers, kneaders, rolls, and the like.

For example, pellets of the thermoplastic resin composition of the present invention can be produced by kneading polycarbonate resin (A), wollastonite (B), graft copolymer (C), vinyl-based copolymer (D), optionally used ultra-high-molecular-weight resin (E) or Teflon-based resin (F), and other additives. In a specific method, the thermoplastic resin composition of the present invention can be produced by kneading and melting the polycarbonate resin (A), wollastonite (B), graft copolymer (C), vinyl-based copolymer (D), and optionally added other additives by a twin-screw extruder, or the like. During this melt-kneading, the wollastonite (B) is preferably added by side feeding in order to efficiently develop a high rigidity and a low linear thermal expansion coefficient. The heating temperature during this melt-kneading is appropriately selected depending on the composition of the thermoplastic resin composition, but is usually 230 to 300°C.

(Molded article)

The molded article of the present invention is produced by molding the thermoplastic resin composition of the present invention.

Examples of methods for molding the thermoplastic resin composition of the present invention include an injection molding method (including insert molding method of films, glass plates, etc.), an injection foam molding method, an injection compression molding method, an extrusion method, a blow molding method, a vacuum molding method, a pressure molding method, a calendar molding method, an inflation molding method, and the like. Among these, the injection molding method, the injection foam molding method, and the injection compression molding method are preferable because they are excellent in mass productivity and can produce a molded article with high dimensional accuracy.

The molded article of the present invention made of the thermoplastic resin composition of the present invention has excellent rigidity, impact resistance, and heat resistance, and a low linear thermal expansion coefficient, and furthermore excellent molded and painted appearances. Therefore, the molded article of the present invention can be used both as an uncoated molded article and as a coated molded article.

Uses of the molded article of the present invention include, for example, an enclosure of personal computers (including notebook and tablet types), projectors (including liquid crystal projectors), televisions, printers, facsimiles, copiers, audio equipment, game machines, cameras (including video cameras, digital cameras, etc.), video equipment (video, etc.), musical instruments, mobile devices (electronic notebooks, personal digital assistants (PDA), etc.), lighting equipment, and communication equipment (telephones (including mobile phones, smartphones) etc.); fishing gear; playground equipment (pachinko goods, etc.); parts for a vehicle; parts of a furniture; sanitary products; products for building material; and the like. Among these uses, it is suitable as vehicle exterior parts for automobiles and the like, since the effect of the present invention is particularly exhibited.

EXAMPLES

The present invention will now be described in more detail with reference to Examples and Comparative Examples. The present invention is in no way limited by the Examples described below as long as they are not beyond the purview of the present invention.

In the following description, "parts" means "parts by mass", and "%" means "% by mass".

(Raw Materials)

In the Examples and Comparative Examples described below, the raw materials for the thermoplastic resin compositions include resin components produced as described below and commercially available products described below.

[Thermoplastic resin composition]

PC-1: The aromatic polycarbonate resin "Novarex 7022PJ" (viscosity average molecular weight: 21,000), manufactured by Mitsubishi Engineering-Plastics Corporation.
PC-2: The aromatic polycarbonate resin "Novarex 7022PJ-LH1" (viscosity average molecular weight: 19,000), manufactured by Mitsubishi Engineering-Plastics Corporation.

[Wollastonite]

As wollastonite, "NYGLOS 4W" manufactured by IMERYS Wollastonite Co., Ltd. having an average length of 63 um and an average diameter of 7 $\mu$m was used after being surface-treated with various silane coupling agents. Table 1 below shows untreated wollastonite-1 and surface-treated wollastonite-2 to -4. Wollastonite-4 corresponds to Wollastonite (B) according to the present invention.

[Table 1]

| | Mass Reduction Rate (30°C→600°C) (%) | Surface Treatment | |
|---|---|---|---|
| | | Treatment Agent | Treatment Amount (%) |
| wollastonite -1 | 0.15 | Untreated | |
| wollastonite -2 | 0.32 | 3,3,3-trifluoro propylsilane | 0.8 |
| wollastonite-3 | 0.38 | 3-glycidoxy propylsilane | 0.8 |
| wollastonite -4 | 0.40 | Hexadecyl trimethoxysilane | 0.8 |

[Production of graft copolymer (C)]

<Production of ABS resin (butadiene-based rubbery polymer/styrene/acrylonitrile copolymer) (ABS)>

80 parts of ion-exchanged water, 100 parts of 1,3-butadiene, 0.5 parts of tert-dodecyl mercaptan, 1.8 part of potassium rosinate, 0.8 parts of sodium carbonate, 0.075 parts of potassium hydroxide and 0.15 parts of potassium persulfate were charged to a stainless-steel autoclave equipped with a stirring device, a heating and cooling device, a thermometer, and an addition device for each raw material. Subsequently, they were reacted at 80°C for 24 hours to obtain diene-based polymer particles (hereinafter, "raw material particles L1" ) was obtained as a water dispersion (latex).
Laser Doppler/frequency analysis was performed using "Microtrac UPA150 Particle Size Analyzer" manufactured by Nikkiso Co., Ltd. to measure the volume average particle size of the raw material particles L1. As a result, the volume average particle diameter of the raw material particles L1 was 300 nm.
Next, 60 parts of latex containing the raw material particles L1, and a solution prepared by dissolving 0.2 parts of sodium pyrophosphate, 0.004 parts of ferrous sulfate heptahydrate and 0.3 parts of glucose in 8 parts of ion-exchanged water were charged to a glass flask equipped with a stirrer, in a nitrogen stream. 40 parts of ion-exchanged water, 0.5 parts of potassium rosinate, 30 parts of styrene, 10 parts of acrylonitrile, 0.1 parts of tert-dodecyl mercaptan, and 0.25 parts of cumene hydroperoxide were added thereto while stirring at an internal temperature of 70°C continuously over 3.5 hours. Then, this reaction solution was further stirred for 1 hour to obtain an aqueous dispersion (latex) of the graft copolymer (C).
After that, 0.5 part of an anti-aging agent was added. Then, an aqueous solution of sulfuric acid was added to solidify, and subsequently the resultant liquid was dried to obtain a powder of graft copolymer (C).

The polymerization conversion rate of the ABS resin (ABS) was 94%, the graft rate was 51%, and the weight average molecular weight of the acetone-soluble component was 80,000.

[Production of vinyl-based copolymer (D)]

<Production of AS resin (styrene/acrylonitrile copolymer) (AS-1) >

After purging a stainless steel autoclave equipped with a ribbon blade with nitrogen, 75 parts of styrene, 25 parts of acrylonitrile, and 20 parts of toluene were continuously added to the reactor. A solution as a molecular weight modifier containing 0.16 parts of tert-dodecylmercaptan and 5 parts of toluene, and a solution as a polymerization initiator containing 0.1 part of 1,1'-azobis(cyclohexane-1-carbonitrile) and 5 parts of toluene were continuously supplied. Polymerization was carried out by controlling the temperature at 110°C. After the polymerization conversion rate reached 75%, the resulting copolymer solution was directly devolatilized by using a twin-screw three-stage vented extruder to devolatilize unreacted monomers and solvents, and AS resin (AS-1) having a weight average molecular weight of 135, 000 was obtained.

<Production of AS resin (styrene/acrylonitrile copolymer) (AS-2) >

After purging a stainless steel autoclave equipped with a ribbon blade with nitrogen, 75 parts of styrene, 25 parts of acrylonitrile, and 20 parts of toluene were continuously added to the reactor. A solution as a molecular weight modifier containing 0.4 parts of tert-dodecylmercaptan and 5 parts of toluene, and a solution as a polymerization initiator containing 0.1 part of 1,1'-azobis(cyclohexane-1-carbonitrile) and 5 parts of toluene were continuously supplied. Polymerization was carried out by controlling the temperature at 110°C. After the polymerization conversion rate reached 75%, the obtained copolymer solution was directly devolatilized by using a twin-screw three-stage vented extruder to devolatilize unreacted monomers and solvent, and AS resin (A-2) having a weight average molecular weight of 80, 000 was obtained.

[Ultra-high-molecular-weight resin (E)]

The following commercially available products were used as the ultra-high-molecular-weight resin (E).

E-1: High-molecular-weight acrylic resin manufactured by Mitsubishi Chemical Corporation "Metabrene (registered trademark) P-531A" (weight average molecular weight: 4.5 million)
E-2: High-molecular-weight acrylonitrile/styrene copolymer manufactured by General Electric Specialty Chemicals "Blendex 869" (weight average molecular weight: 3.8 million)

[Teflon-based resin (F)]

The following commercially available product was used as the Teflon-based resin (F).
F: Acrylic-modified Teflon polymer manufactured by Mitsubishi Chemical Corporation "Metabrene (registered trademark) A-3000"

[Other inorganic fillers]

Talc-1: Talc having an average particle diameter of 4.75 $\mu$m (manufactured by Hayashi Kasei Co., Ltd.: Upn HS-T0.5)
Talc-2: Talc having an average particle diameter of 4.5 $\mu$m (manufactured by Nippon Talc Co., Ltd.: Micro Ace P-4) treated with 3-glycidoxypropyltriethoxysilane
GF-1: Glass fiber having an average fiber length of 40 $\mu$m and an average fiber diameter of 11 $\mu$m (manufactured by Nitto Boseki Co., Ltd.: PF 40E-001)
GF-2: Epoxysilane-treated glass fiber having an average fiber length of 3 mm and an average fiber diameter of 13 $\mu$m (manufactured by Nitto Boseki Co., Ltd.: CS 3PE 937S)

[Examples 1 to 12, Comparative Examples 1 to 9]

Of the raw materials shown in Tables 2 and 3, the raw materials excluding the inorganic filler were blended at the ratios shown in Tables 2 and 3 in a Henschel mixer. After that, it was extruded at 260°C using a vented twin-screw extruder TEM26SS manufactured by Shibaura Kikai Co., Ltd. The inorganic filler was added by side feeding while controlling the addition amount with a weight feeder so that each proportion shown in Tables 2 and 3 was obtained, whereby pellets of the thermoplastic resin composition were obtained. The obtained resin pellets were dried at 120°C for about 5 hours to reduce the moisture content in the pellets to 200 ppm or less. After that, an injection molding machine (manufactured by Shibaura Machine Co., Ltd.: IS-100GN) was used to continuously form dumbbell-shaped (ISO3167: test piece A type ) test pieces under the conditions of a cylinder temperature of 260°C, a mold temperature of 80°C, a molding cycle of 50 seconds, and an injection speed of 40 mm/sec. In addition, as a test piece for evaluation of molding appearance and coating appearance, an injection molding machine (manufactured by Shibaura Kikai Co., Ltd.: EC130SX) was used under the conditions of a cylinder temperature of 260°C, a mold temperature of 80°C, a molding cycle of 50 seconds, and an injection speed of 50 mm/sec, whereby that plate specimens of 150 × 150 × 3 mm were continuously injection-molded. A test piece obtained by leaving the test piece for 24 hours in an environment of a temperature of 23 °C and a relative humidity of 50 % was evaluated as follows, and the results are shown in Tables 2 and 3.

Tables 2 and 3 also show the rubbery polymer content derived from the ABS resin in 100 parts of the resin component.

<Charpy impact strength>

The Charpy impact strength was measured according to ISO 179-1:2013 version. This value is preferably 20 kJ/m$^2$ or more.

<Flexural modulus>

The flexural modulus was measured according to ISO 178:2013 edition. The flexural modulus is an index of the stiffness of a molded article. This value is preferably 4000 MPa or more.

<Linear thermal expansion coefficient>

From the center of the dumbbell test piece, it was cut to a length of 10 mm in the resin flow direction (MD direction) and used as a measurement sample. Using a TMA SS7100 device manufactured by Hitachi High-Tech Science Co., Ltd., under a nitrogen atmosphere with a load of 5 g in compression mode, the temperature was raised from room temperature to 100°C at a heating rate of 5°C/min. After that, the temperature was lowered from 100°C to 25°C at a temperature lowering rate of 5°C/min. The temperature was again raised from 25°C to 100°C at a heating rate 5°C/min. At this time, the average linear thermal expansion coefficient between 30°C and 70°C was measured during the second temperature rise. This value is preferably $5 \times 10^{-5}$ /K or less.

<Appearance of molded article>

The appearance of the obtained plate test piece was visually observed and evaluated according to the following evaluation criteria.

○: The surface is smooth and free of defects.
x: Defects such as foreign matter and flow marks are present on the surface.

<Coating appearance>

The obtained plate test piece was coated according to the following procedure, and the coating appearance on the surface was visually observed and evaluated according to the following criteria.

(1) Painting

On the surface of the plate test piece, a paint for painting consisting of 80 parts of a urethane paint base agent, 40 parts of a synthetic resin paint thinner and 20 parts of a curing agent was spray-painted (paint thickness: 20 to 30 μm). The painted test piece was left at 23°C for 5 minutes.

(2) Drying

After that, it was dried at 80°C for 30 minutes to obtain a coated test piece.

<Evaluation criteria for coating appearance>

○: Good with no coating unevenness.
x: There is coating unevenness.

<Heat resistance (HDT)>

According to ISO 75-2: 2013 version, the deflection temperature was measured by the flatwise method with a load of 1.80 MPa. This value is preferably 100°C or higher.

<Melt volume rate (MVR)>

According to the ISO 1133 standard, the pellet MVR was measured under the conditions of 260°C and 98N. MVR is a measure of the moldability of a thermoplastic resin composition.

[Table 2]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Thermoplastic Resin Composition Formulation (parts) | | PC-1 | 58 | 50 | 50 | 50 | 50 | 50 | 50 | | | | | |
| | | PC-2 | | | | | | | | 50.4 | 50.4 | 61 | 47 | 47 |
| | | Wollastonite-1 | | | | | | | | | | | | |
| | | Wollastonite-2 | | | | | | | | | | | | |
| | | Wollastonite-3 | | | | | | | | | | | | |
| | | Wollastonite-4 | 17 | 25 | 25 | 25 | 25 | 20 | 15 | 25 | 25 | 25 | 30 | 30 |
| | | ABS | 9 | 15 | 15 | 15 | 15 | 15 | 15 | 10 | 14 | 9 | 14 | 9 |
| | | AS-1 | 16 | 10 | 10 | 10 | 10 | 10 | 10 | | | | | |
| | | AS-2 | | | | | | | | 14.6 | 10.6 | 5 | 9 | 14 |
| | | E-1 | 2 | | 2 | | | | | 2 | 2 | 2 | 2 | 2 |
| | | E-2 | | | | 2 | | | | | | | | |
| | | F | | | | | | 2 | | | | | | |
| | | Talc-1 | | | | | | 5 | 10 | | | | | |
| | | Talc-2 | | | | | | | | | | | | |
| | | GF-1 | | | | | | | | | | | | |
| | | GF-2 | | | | | | | | | | | | |
| Content (parts) of Rubbery Polymer in 100 parts of Resin Component | | | 6.4 | 12 | 11.7 | 11.7 | 11.7 | 12 | 12 | 7.8 | 10.9 | 7 | 11.7 | 7.5 |
| Evaluation Results | | Charpy Impact Strength(kJ/m$^2$) | 42 | 29 | 28 | 31 | 37 | 29 | 25 | 22 | 36 | 36 | 46 | 20 |
| | | Flexural Modulus(MPa) | 4130 | 4890 | 4790 | 4850 | 4090 | 4750 | 4630 | 5200 | 4790 | 4870 | 5610 | 6200 |
| | | Linear Thermal Expansion Coefficient($\times 10^{-5}$/K) | 4.8 | 4.1 | 4.2 | 4.1 | 4.7 | 4.2 | 4.1 | 3.9 | 4.0 | 3.9 | 3.5 | 3.4 |
| | | Appearance of Molded Article | ○ | × | ○ | ○ | ○ | × | × | ○ | ○ | ○ | ○ | ○ |
| | | Coating Appearance | ○ | × | ○ | ○ | ○ | × | × | ○ | ○ | ○ | ○ | ○ |
| | | HDT(℃) | 110 | 116 | 114 | 117 | 111 | 117 | 120 | 109 | 112 | 120 | 112 | 114 |
| | | MVR(cm$^3$/10minntes) | 27 | 21 | 21 | 19 | 19 | 19 | 18 | 60 | 40 | 35 | 35 | 52 |

[Table 3]

| Thermoplastic Resin Composition Formulation (parts) | Comparative Example | | | | | | | | |
|---|---|---|---|---|---|---|---|---|---|
| | 1 | 2 | 3 | 4 | 5 | 6 | 7 | 8 | 9 |
| PC-1 | 50 | 50 | 50 | 50 | 50 | 50 | 50 | 50 | 50 |
| PC-2 | | | | | | | | | |
| Wollastonite-1 | | 25 | | | | | | | |
| Wollastonite-2 | | | 25 | | | | | | |
| Wollastonite-3 | | | | 25 | | | | | |
| Wollastonite-4 | | | | | | | | | |
| ABS | 15 | 15 | 15 | 15 | 15 | 15 | 15 | 15 | 15 |
| AS-1 | 10 | 10 | 10 | 10 | 10 | 10 | 10 | 10 | 10 |
| AS-2 | | | | | | | | | |
| E-1 | | | | | | | | | |
| E-2 | | | | | | | | | |
| F | | | | | | | | | 2 |
| Talc-1 | | | | | 25 | | | | |
| Talc-2 | | | | | | 25 | | | |
| GF-1 | | | | | | | 25 | | |
| GF-2 | | | | | | | | 25 | 25 |
| Content (parts) of Rubbery Polymer in 100 parts of Resin Component | 12 | 12 | 12 | 12 | 12 | 12 | 12 | 12 | 11.7 |

| Evaluation Results | 1 | 2 | 3 | 4 | 5 | 6 | 7 | 8 | 9 |
|---|---|---|---|---|---|---|---|---|---|
| Charpy Impact Strength(kJ/m²) | 62 | 6 | 5 | 6 | 10 | 7 | 7 | 12 | 14 |
| Flexural Modulus(MPa) | 2050 | 5260 | 5040 | 4930 | 4500 | 4290 | 3080 | 5930 | 5800 |
| Linear Thermal Expansion Coefficient($\times 10^{-5}$/K) | 6.5 | 3.8 | 4.0 | 4.1 | 4.3 | 4.5 | 4.8 | 2.9 | 3.0 |
| Appearance of Molded Article | ○ | × | × | × | × | × | × | × | × |
| Coating Appearance | ○ | × | × | × | × | × | × | × | × |
| HDT(°C) | 100 | 119 | 120 | 117 | 119 | 119 | 113 | 133 | 131 |
| MVR(cm³/10minutes) | 52 | 14 | 20 | 14 | 16 | 17 | 16 | 10 | 10 |

The following can be seen from Tables 2 and 3. Comparative Example 1, which does not contain an inorganic filler, has high impact resistance, but low rigidity and a high linear thermal expansion coefficient.

In Comparative Example 2 using untreated wollastonite and Comparative Examples 3 and 4 using wollastonite treated with other treatment agents, the rigidity was improved and the linear thermal expansion coefficient was also reduced. However, the impact resistance is remarkably lowered. Comparative Examples 5 to 9 using talc and glass fibers other than wollastonite also show a large decrease in impact resistance.

Comparative Example 1, which does not contain an inorganic filler, is excellent in molded appearance and paint appearance. However, Comparative Examples 2 to 9 are all inferior in molding appearance and coating appearance.

On the other hand, in Examples 1 to 12, in which wollastonite treated with hexadecyltrimethoxysilane was used, deterioration in impact resistance was suppressed, rigidity was increased, and linear thermal expansion coefficient was also reduced.

In particular, in Examples 1, 3 to 5, 8 to 12, in which the ultra-high-molecular-weight resin (E) or the Teflon-based resin (F) is blended, the molding appearance and coating appearance are good.

From these results, according to the present invention, it is possible to provide a thermoplastic resin molded article that satisfies the required properties of high rigidity, high impact resistance, high heat resistance, and low linear thermal expansion coefficient, furthermore good molding appearance and good coating appearance at a high level and in a well-balanced manner.

Although the present invention has been described in detail by way of the specific modes, it is apparent for those skilled in the art that various changes can be made without departing from the spirit and scope of the present invention.

The present application is based on Japanese Patent Application No. 2021-043782 filed on March 17, 2021, the entire contents of which are incorporated herein by reference.

## Claims

1. A thermoplastic resin composition containing a polycarbonate resin (A) and a wollastonite (B), wherein the wollastonite (B) is treated with a silane coupling agent containing a linear alkyl group having 12 or more carbon atoms.

2. The thermoplastic resin composition according to claim 1, further comprising a graft copolymer (C), or a graft copolymer (C) and a vinyl-based copolymer (D), the vinyl-based copolymer being obtained by copolymerizing at least an aromatic vinyl-based monomer and a vinyl cyanide-based monomer.

3. The thermoplastic resin composition according to claim 2, wherein the graft copolymer (C) is a rubber-reinforced styrene-acrylonitrile-based graft copolymer obtained by graft-polymerizing a monomer mixture containing at least an aromatic vinyl-based monomer and a vinyl cyanide-based monomer in the presence of a diene-based rubbery polymer.

4. The thermoplastic resin composition according to claim 2 or 3, wherein the thermoplastic resin composition contains 45 to 65 parts by mass of the polycarbonate resin (A), 15 to 40 parts by mass of an inorganic filler containing the wollastonite (B), 7 to 20 parts by mass of the graft copolymer (C), and 0 to 20 parts by mass of the vinyl-based copolymer (D) so that the total is 100 parts by mass.

5. The thermoplastic resin composition according to any one of claims 2 to 4, further comprising an ultra-high-molecular-weight resin (E) having a weight average molecular weight of 2 million or more, or a Teflon-based resin (F), which is different from the polycarbonate resin (A), the graft copolymer (C) and the vinyl-based copolymer (D).

6. A molded article obtained by molding the thermoplastic resin composition according to any one of claims 1 to 5.

7. The molded article according to claim 6, wherein the article is a vehicle exterior part.

## INTERNATIONAL SEARCH REPORT

International application No.

**PCT/JP2021/044080**

### A. CLASSIFICATION OF SUBJECT MATTER

*C08K 9/06*(2006.01)i; *C08L 25/12*(2006.01)i; *C08L 27/18*(2006.01)i; *C08L 51/04*(2006.01)i; *C08L 69/00*(2006.01)i; *C08L 101/12*(2006.01)i; *C08K 3/34*(2006.01)i
FI:    C08L69/00; C08K9/06; C08K3/34; C08L51/04; C08L25/12; C08L27/18; C08L101/12

According to International Patent Classification (IPC) or to both national classification and IPC

### B. FIELDS SEARCHED

Minimum documentation searched (classification system followed by classification symbols)

C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-151801 A (TEIJIN LTD.) 12 September 2019 (2019-09-12) | 1, 7 |
|  | claims, paragraphs [0001], [0084], [0085], example 1 |  |
| Y |  | 1-7 |
| Y | JP 2019-116562 A (CANON INC.) 18 July 2019 (2019-07-18) | 1-6 |
|  | claims, paragraphs [0008], [0041], example 3 |  |
| Y | JP 2011-140587 A (MITSUBISHI ENGINEERING PLASTICS CORP.) 21 July 2011 (2011-07-21) | 1-7 |
|  | claims, paragraphs [0045], [0046], [0093] |  |
| Y | JP 2013-501103 A (SABIC INNOVATIVE PLASTICS IP B.V.) 10 January 2013 (2013-01-10) | 1-6 |
|  | claims, paragraph [0062] |  |
| Y | JP 2010-174121 A (TEIJIN CHEM. LTD.) 12 August 2010 (2010-08-12) | 1-7 |
|  | claims, paragraphs [0007], [0029]-[0031], [0111], example 16 |  |

☑ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **07 February 2022** | **22 February 2022** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

**INTERNATIONAL SEARCH REPORT**

International application No.

**PCT/JP2021/044080**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2009-35616 A (MITSUBISHI ENGINEERING PLASTICS CORP.) 19 February 2009 (2009-02-19) claims, paragraphs [0012], [0055], [0063], [0075], example 7 | 1-7 |
| X | JP 2004-168941 A (TEIJIN CHEM. LTD.) 17 June 2004 (2004-06-17) claims, paragraphs [0134], [0139], [0143], [0237], example 31 | 1-7 |
| Y | | 5 |
| Y | JP 2011-515533 A (CHEIL INDUSTRIES INC.) 19 May 2011 (2011-05-19) claims, paragraph [0054], examples | 5 |
| Y | JP 2011-137158 A (CHEIL INDUSTRIES INC.) 14 July 2011 (2011-07-14) claims, examples | 5 |

Form PCT/ISA/210 (second sheet) (January 2015)

**INTERNATIONAL SEARCH REPORT**
Information on patent family members

International application No.

**PCT/JP2021/044080**

| Patent document cited in search report | | | Publication date (day/month/year) | Patent family member(s) | Publication date (day/month/year) |
|---|---|---|---|---|---|
| JP | 2019-151801 | A | 12 September 2019 | (Family: none) | |
| JP | 2019-116562 | A | 18 July 2019 | (Family: none) | |
| JP | 2011-140587 | A | 21 July 2011 | (Family: none) | |
| JP | 2013-501103 | A | 10 January 2013 | US 2011/0028615 A1 claims, paragraph [0063] WO 2011/014778 A1 EP 2459647 A1 CN 102471569 A KR 10-2012-0089436 A | |
| JP | 2010-174121 | A | 12 August 2010 | (Family: none) | |
| JP | 2009-35616 | A | 19 February 2009 | (Family: none) | |
| JP | 2004-168941 | A | 17 June 2004 | (Family: none) | |
| JP | 2011-515533 | A | 19 May 2011 | US 2011/0009524 A1 claims, paragraph [0058], examples WO 2009/116722 A1 EP 2268709 B1 KR 10-2009-0100985 A CN 101977966 A | |
| JP | 2011-137158 | A | 14 July 2011 | US 2011/0160380 A1 claims, examples EP 2341104 A1 KR 10-2011-0079488 A CN 102115585 A | |

Form PCT/ISA/210 (patent family annex) (January 2015)

**REFERENCES CITED IN THE DESCRIPTION**

**Patent documents cited in the description**

- JP 2015083702 A
- JP 2016102167 A
- JP 2013032537 A
- US 3419634 A
- JP 2021043782 A